# EUROPEAN PATENT SPECIFICATION

(11) **EP 2 708 343 B1**
(45) Date of publication and mention of the grant of the patent: **06.02.2019**
(21) Application number: 12184824.6
(22) Date of filing: 18.09.2012
(51) Int. Cl.: B29C 44/06, F16L 58/04, F16L 59/14, F16L 59/02, B32B 3/04, B32B 5/20, B32B 1/08, B32B 15/04, B32B 5/24, B32B 3/10

(54) **AN INSULATING PHENOLIC FOAM**
Dämmender Phenolschaum
Une mousse phénolique isolante

(43) Date of publication of application: 19.03.2014
(73) Proprietor: Kingspan Holdings (IRL) Limited, Kingscourt, County Cavan (IE)
(72) Inventor: Holland, Philip, Huddersfield, Yorkshire HD7 4QR (GB)
(74) Representative: Tomkins & Co

(56) References cited:
- DD-A1- 274 078
- DE-B- 1 272 058
- FR-A1- 2 388 059
- GB-A- 2 427 011
- US-A- 3 614 967
- US-A- 4 231 825
- US-A- 5 973 018
- US-A1- 2009 270 005
- US-B1- 6 273 144

## Description

### Introduction

The invention relates to phenolic insulating foam sections, particularly suitable for pipe insulation.

Historically, phenolic resins have been the preferred thermosetting resin material when low smoke emission and self-extinguishing ability in fire situations is paramount. One such application is in building and pipe insulation where phenolic foams provide both thermal insulation in use, and good performance during a fire.

DE1272058 describes a composite pipe consisting of a steel tube with a surrounding sheath of hardened plastic foam having a lubricating layer between the tube and the sheath, said lubricating layer having an acid binding substance therein FR2388059 describes a corrosion inhibitor mixture for pipe insulation.

US2009270005 relates to a foamable resol type phenolic resin forming material comprising a liquid resol type phenolic resin, a foaming agent, a foam stabilizer, an additive and an acid curing agent, said additive containing a nitrogen-containing bridged cyclic compound and said foam stabilizer containing a chlorinated aliphatic hydrocarbon compound having 2 to 5 carbon atoms, and a phenolic resin foam product obtained by foaming and curing this forming material.

As conventional phenolic foam is produced using an acid catalyst, there is a perception that when this foam is in direct contact with metal, such as an insulated pipe, it could induce corrosion of the metal.

### Statements of Invention

In one aspect the present invention provides an elongate shaped section comprising a hollow phenolic foam body, as set out in the claims. Some preferred embodiments are described in the dependent claims.

Disclosed herein is a foam body having an outer facing web and an inner facing web wherein at least one of the webs is porous and comprises a passivating agent. The passivating agent must be of limited solubility in water so that immediate reaction with the acidic catalyst species does not readily occur - typically of certain alkali metal, alkaline earth metal or aluminium carbonates, oxides or hydroxides.

The inner facing web is porous.

Alternatively or additionally the outer facing web is porous.

The passivating agent is a neutralising agent. The neutralising agent may comprise an alkali metal, alkaline earth metal, or aluminium carbonate oxide, or hydroxide with limited water solubility.

One such neutralising agent comprises calcium carbonate.

The foam body comprises an elongate shaped hollow phenolic foam body of substantially uniform cross section, the foam body having an outer facing web and an inner facing web wherein at least the inner facing web is porous and is impregnated with a neutralising agent as set out in the claims.

In one embodiment the foam body is of curvilinear shape. The body is slit longitudinally into section parts for wrapping around an object.

The section parts are linked by the outer web on one side. Facing ends of the section parts are faced with the inner facing web on an opposite side.
In one case the foam body is generally cylindrical.

The foam body may comprise an insulating body for a pipe.

Alternatively the foam body comprises a duct or an insulating body therefor.

The foam body may be of rectilinear shape.

In one embodiment the inner web is of porous fibreglass material. The glass material may be in the form of a veil or mesh which can weigh, for example from 20 to 60 grams per square metre.

In one embodiment the outer web is of metal foil such as aluminium foil, paper, glass, thermoplastic film or combinations of two or more thereof.

The outer web may, for example be of aluminium foil.

The invention provide an elongate shaped section comprising a hollow phenolic foam body as set out in the claims, of substantially uniform cross section, the foam body having an outer facing web and an inner facing web wherein the body is slit longitudinally into section parts for wrapping around an object, wherein the section parts are linked by the outer web on one side and wherein facing ends of the section parts are faced with the inner facing web on an opposite side and wherein at least the inner web is porous and is impregnated with a neutralising agent as set out in the claims.

Described herein is a continuous process for producing elongate phenolic foam insulating shaped sections comprising the steps of:-
providing a first facing web;
providing a second facing web;
laying down liquid phenolic foam reactants between the webs;
shaping the webs to conform the web and the foam mixture to a desired profile shape;
heating the inner and outer webs; and
supporting the webs to maintain the foam in the desired shape until the foam has cured to a shaped profile section.

The inner and outer webs may be heated to a temperature of between 45°C and 85°C. The inner and outer webs may be heated to a temperature of between 50°C and 70°C.

The inner web is shaped by a mandrel. The mandrel may be heated. The mandrel may be a hollow mandrel which is heated by circulating a heat exchange fluid therethrough.

The mandrel may be at least partially coated with an anti-friction agent such as Teflon (RTM).

The outer web may be shaped by a mould. The mould may be heated. The mould may be heated by radiant heat.

The process may include the step of post-curing the elongate foam insulating shaped section.

The shaped section may be post cured at a temperature of from 20°C and 85°C for a period of 4 to 48 hours. The shaped sections may be post cured at a temperature of from 50°C to 85°C for a period of from 4 to 48 hours.

The process may comprise cutting the shaped section to a desired length. The shaped section may be cut to a desired length in-line.

The elongate foam insulating shaped section comprises a hollow foam body of substantially uniform cross section as set out in the claims. The shaped section may be of curvilinear, preferably cylindrical shape.

The shaped section may be of rectilinear shape.

The foam body may comprise an insulating body for a pipe. Alternatively the foam body comprises a duct or an insulating body therefor. The foam body may comprise a pipe support.

Described herein is a process for manufacturing continuous profiled insulating phenolic foam pipe-sections using phenolic foam reactants.

The term phenolic foam reactants means a resin substantially based on phenol formaldehyde to produce a substantially closed cell foam with stabiliser, plastisicer, blowing agent, surfactant, catalyst, and/or initiator system and possibly other ingredients including polyether or polyester polyol and/or isocyanurate.

The process involves the continuous feeding of facing webs, laying down of phenolic foam pre-polymer between these webs, and shaping the section continuously entering a double-chain shaped heated conveyor which enables the pre-polymer to cure as a shaped profile section.

We describe a process for continuously producing profiled sections of phenolic foam with good retention of low thermal conductivity properties where desired. The process is capable of very low inherent waste and scrap rates as no waste section is produced, the waste being limited to cutting blade width and occasional scrap sections at machine start-up or during processing difficulties (which are naturally limited as the process can be stopped and started with ease).

We describe a continuous process for producing phenolic foam insulating pipe-sections with minimal waste involving the continuous feeding of facing webs, laying down of phenolic foam pre-polymer between these webs, and shaping the section continuously entering a double-belt shaped heated conveyor which enables the pre-polymer to cure as a shaped profile section.

Both the inner mandrel and outer mould sections may be heated to ensure adequate curing of the phenolic foam insulation in a commercially useful time at a rate exceeding 2 metres/minute, preferably exceeding 4 metres/minute.

The inner mandrel and outer mould sections enable a wide variety of sizes of pipe-section or similar continuously profiled phenolic foam insulating section to be produced.

A variety of phenolic resins and catalyst systems may be used to produce continuous pipe-section or other profiled insulating sections by this method.

The pipe sections may be post-cured at between 50 and 85°C to produce product with good dimensional stability and stable thermal conductivity.

A variety of different facing materials including aluminium foil, paper, glass, thermoplastic film or a combination of these may be used.

### Brief Description of the Drawings

The invention will be more clearly understood from the following description thereof given by way of example only with reference to the accompanying drawings, in which : -
Fig. 1 is a cross sectional view of a phenolic foam insulating section according to the invention;
Fig. 2 is a cross sectional view of the insulating section of Fig. 1, partially open for fitting around a pipe;
Fig. 3 is a diagrammatic view of an apparatus used in producing the insulating section of Fig. 1;
Fig. 4 is a perspective view of a detail of the apparatus of Fig. 3;
Fig. 5 is a perspective view of a heated mould detail of the apparatus;
Fig. 6 is a plan view of a mould detail; and
Fig. 7 is a diagrammatic cross sectional view illustrating the mounting of a mandrel.

### Detailed Description

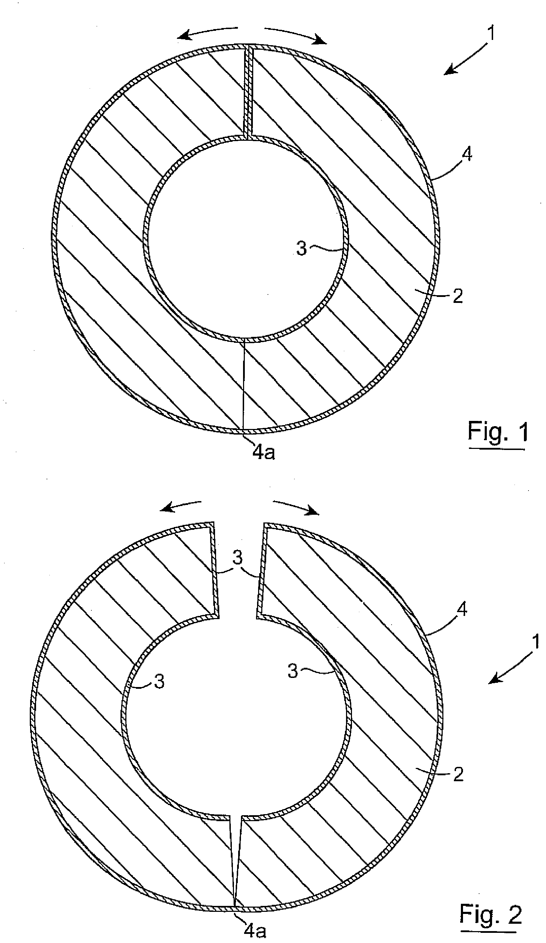

Referring to the drawings, and initially to Figs. 1 and 2 thereof there is illustrated an elongate shaped phenolic section, in this case in the form of a pipe insulating section 1. The pipe insulating section comprises a generally cylindrical hollow phenolic foam body 2 of substantially uniform cross section with an inner facing web 3 and an outer facing web 4. It will be noted that in this case the phenolic foam body 2 is slit longitudinally to provide section halves which can be opened as illustrated in Fig. 2 to facilitate wrapping around a pipe to insulate the pipe. The section halves are linked by the outer web 4 at one side and facing ends of the section halves at the other end are faced with the inner facing web 3. The outer web 4 forms a hinge 4a at the joint between the section halves.

The inner web 3 comprises a porous material which contains/comprises and/or is impregnated with a passivating agent. The passivating agent may be a neutralising agent for acid. One such material is calcium carbonate. The porous material may, for example be of a veil composed of glass filaments. The passivating agent may be incorporated into the material during manufacture or added (for example by coating) subsequently. The material typically weighs from 20 to 60 grams per square metre. A further amount of typically 10 to 50 grams per square metre of calcium carbonate is added.

In the invention, in the event that acidic moisture leaches from the foam it is neutralised by the neutralising agent (in this case calcium carbonate) before it can reach the pipework against which the product is placed. In addition, because the liner is porous, moisture can pass through which will aid drying/curing and prevent moisture from becoming trapped either within the foam or between the foam and the surface on which it rests.

The outer web 4 may be any suitable material such as an aluminium foil.

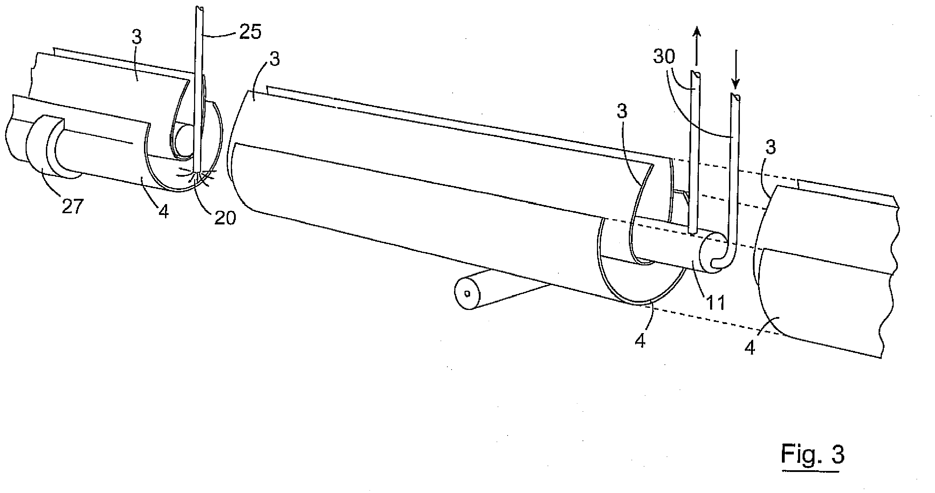

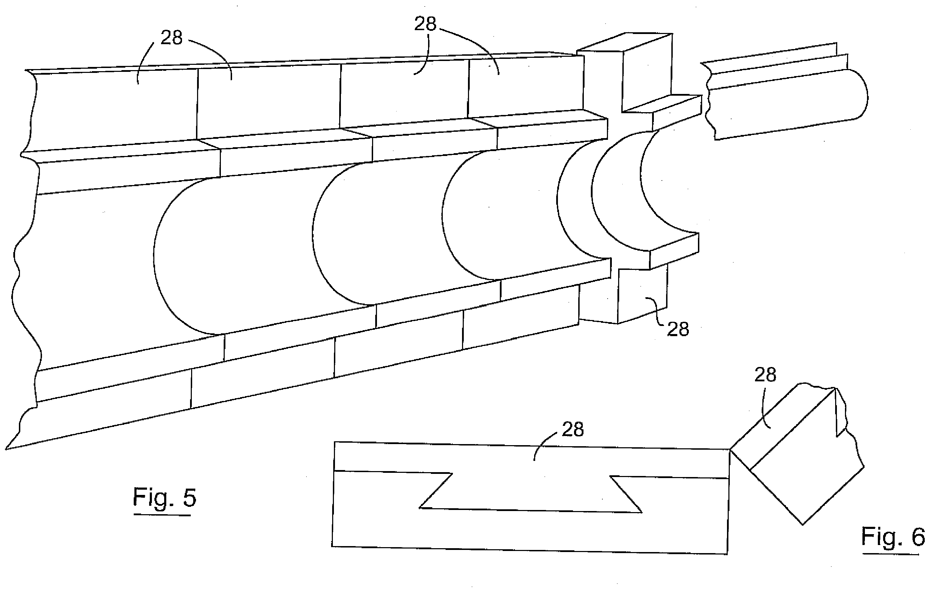

Referring now to Figs. 3 to 6 there is illustrated an apparatus used in manufacturing an elongate shaped phenolic section of the invention. The apparatus comprises an outer mould 10 for forming the outer facing 4 into a desired shape, in this case a cylinder, and a inner mandrel 11 for forming the inner facing 3 into a desired shape, in this case also a cylinder which is of smaller diameter than that of the cylinder defined by the outer facing 4. The facings 3, 4 define a hollow core therebetween into which liquid foam reactants 20 are injected through an injector 25.

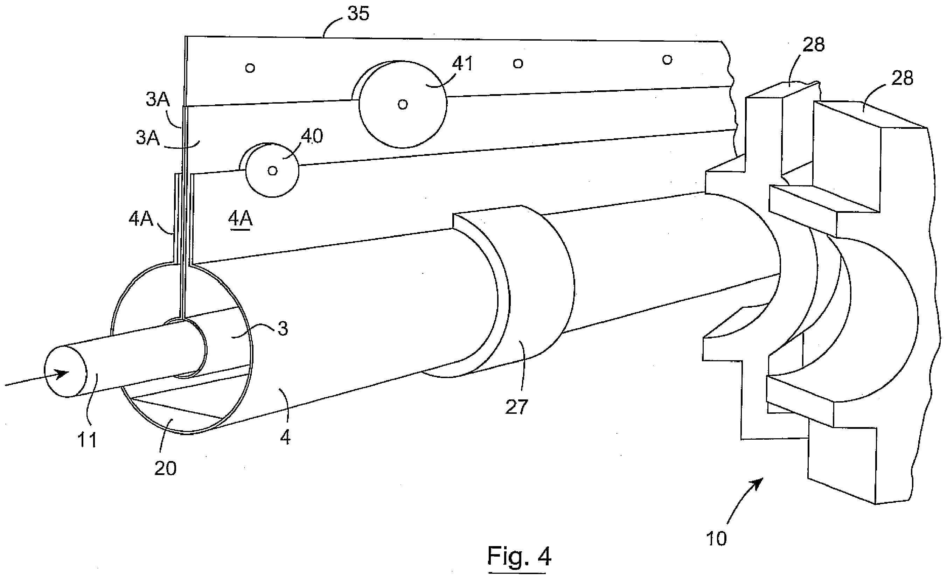

The outer facing 4 is led through a former 27 prior to entry to the mould 10. The mould 10 comprises a number of mould sections 28 which are interlinked as illustrated in Figs. 4 to 6. The mould sections 28 are heated to a temperature of from 45°C to 85°C, preferably between 50 and 70°C using radiant heat. Similarly, the former 11 is heated to similar temperatures using a heat exchange medium such as hot water circulated through the former 11 to and from inlet/outlets 30.

The mandrel/former 11 has an upwardly projecting fin 35 over which excess inner facing 3A is led. The fin 35 is used to mount the mandrel 11 in the machine. The excess inner facing 3A is guided by a guide wheel 40 and the excess outer facing 4A is guided by a guide wheel 41.

The mandrel is preferably at least partially coated with a friction reducing material such as Teflon which is a Trade Mark of Du Pont. This has the effect of reducing the friction which acts between the moving web and the stationary mandrel. Such friction reducing measures are important because friction can cause the inner web to move more slowly than the outer web. The expanding foam lies between the webs and the differential movement of the webs may result in the cells of the foam becoming elongated with consequent adverse effects on the properties of the foam.

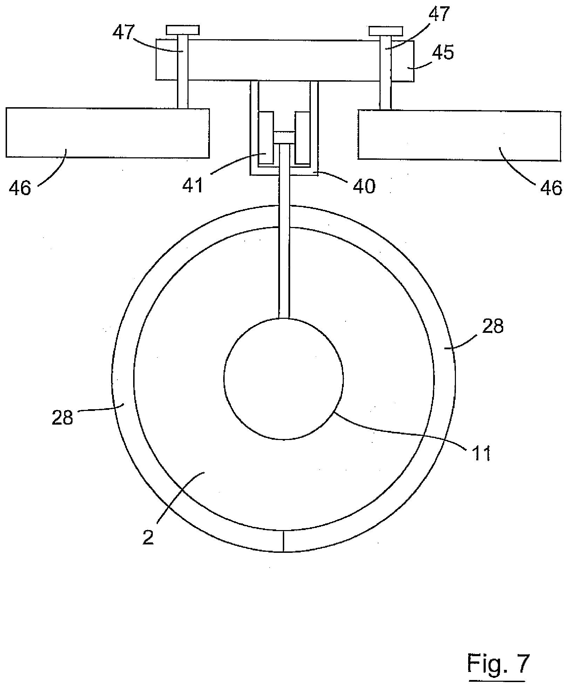

Referring to Fig. 7 for ease of mandrel change-over a mandrel 11 is located into a metal track 40 using a series of wheel carriages 41 along the length of the mandrel. The track 40 runs along the length of the machine. The track 40 is supported on a mandrel mounting block 45 which is in turn mounted to the machine frame 46 by adjustable mounting brackets 47.

The centre line of each mandrel is designed to have exactly the same measurement in relation to the track so that when the mandrel is changed, the centre point of the next mandrel is correctly aligned in relation to the moulds 28. Any changes to the position of the mandrel 11 are made by moving the track 40 in which it rests, thereby altering the effective position of all mandrels simultaneously.

A solution to the problem of continuous production of profiled insulated phenolic foam sections with minimal waste is provided by the invention.

In the invention, webs which form the facings 3, 4 are introduced and shaped immediately prior to laying down a pre-polymer mix onto the 'outer' web 4. The 'outer' web 4 is curled to fit inside the continuously rotated stiff mould sections 28 rotating on two chain systems either side on a central axis. These mould sections 28 form the shape of the outside of the pipe-section insulation profile, and are provided in short sections which can be readily changed to enable different outer diameter or shapes of profile. The mould sections 28 may be solid or hollow material, and may have means of electrical or liquid flow heating, or be heated separately by infra-red, conductive or air-flow means. Typically the mould sections 28 may be formed from wood, plastic, resin or metal. The upper part of the mould sections 28 grip an excess 4A of the outer web facing 4, providing the traction to pull this along the central axis of the machine. The 'inner' web 3 is curled continuously around a central profiled mandrel 11 which extends part way along the central axis of the machine, but does not move with the outer chains, but remains static. The central mandrel 11 may be heated, normally using a liquid (water or oil) circulation system.

Phenol-formaldehyde resin is mixed with suitable surfactant, plasticiser, and blowing agent system, and with a fast-acting catalyst immediately prior to the mix being laid down through the nozzle 25 onto a continuously moving facing web 4 shaped to hold the mixture. The whole is fed continuously between the double chain system of moulds 28 so that the outer web 4 is held to the outer mould section shape, moving continuously at the same speed as these mould sections, and the inner web 3 slides over the inner heated mandrel 11. Several metres along the central axis of the machine, at the point where the resin mix has polymerised sufficiently to be self-supporting, the mandrel section 11 finishes. The final polymerisation and partial cure of the outer section then continues along the central axis of the machine and, at the point where the outside of the pipe-section is sufficiently cured, the mould sections 28 are parted on the double chain and returned to the beginning of the process along the outer sides of the machine. If the moulds 28 are not self heating, they may be heated just prior to the front of the machine by radiators placed along the outside.

The partly cured profile emerging continuously from the machine is cut into sections of suitable length for handling (typically 1 metre), slit continuously to allow folding over pipe lengths as described above, and collected in cassettes or boxes for further heat curing, if required.

By this method phenolic foam insulating pipe sections can be made continuously with much reduced waste and productivity over conventional procedures.

### Example 1

Phenolic formaldehyde resole was pre-mixed with 10 parts per hundred resole (pph) of cyclo:iso pentane (85:15) blowing agent mix containing 5% perfluoroalkane type P5052. This was continuously fed into a low pressure dynamic mixer to which 65% phenol sulphonic acid was added at a rate of 25 pph. The resultant pre-polymer was fed onto a continuously moving facing web shaped to hold the mixture. The whole was fed continuously at 2.5 metres/minute between a 12 metre double chain system of moulds so that the outer web was held to the outer mould section shape (diameter 74mm) as described above, moving continuously at the same speed as these mould sections, and the inner web slid over the inner heated mandrel (diameter 38mm), which projected 8 metres along the central axis of the machine. The inner mandrel was heated to 60°C and the outer mould sections to 50°C.

The partly cured profile emerging continuously from the machine was cut into sections of suitable length for handling (1 metre), slit continuously to allow folding over pipe lengths, and collected in boxes for further heat curing. The sections thus produced showed good dimensional stability and thermal conductivity suitable for use as pipe section insulation.

The invention is not limited to insulating sections for pipes or ducts. It may be used, for example, to produce short lengths (typically 50mm to 250mm) of similar shape with higher density for use as a support or the like. Such densities would typically lie in the range of from 50 kg/m³ to 125kg/m³ and the material produced has sufficient compressive strength to be able to support a pipe system which may be insulated by the insulated pipe sections of the invention. Products of this type are known as pipe supports.

## Claims

1. An elongate shaped section (1) comprising a hollow phenolic foam body (2) of substantially uniform cross section, the foam body having an outer facing web (4) and an inner facing web (3) wherein the body is slit longitudinally into section parts for wrapping around an object, wherein the section parts are linked by the outer web on one side and wherein facing ends of the section parts are faced with the inner facing web on an opposite side and wherein at least inner facing web is porous and is impregnated with a neutralising agent which is a carbonate, an oxide or a hydroxide of, an alkali metal, an alkaline earth metal, or aluminium with limited water solubility.

2. The elongate shaped section as claimed in claim 1, wherein the outer facing web is porous.

3. The elongate shaped section as claimed in any preceding claim, wherein the neutralising agent comprises calcium carbonate.

4. The elongate shaped section as claimed in any preceding claim, wherein the foam body is of curvilinear shape.

5. The elongate shaped section as claimed in any preceding claim, wherein the foam body is substantially cylindrical.

6. The elongate shaped section as claimed in any preceding claim, wherein the outer web is of metal foil, paper, glass, thermoplastic film or combinations of two or more thereof.

7. The elongate shaped section as claimed in claim 6, wherein the outer web is an aluminium foil.

## Patentansprüche

1. Langgestrecktes Formteil (1), welches einen hohlen Phenolschaumkörper (2) mit im Wesentlichen gleichförmigem Querschnitt aufweist, wobei der Schaumkörper eine äußere Verkleidungsbahn (4) und eine innere Verkleidungsbahn (3) hat, wobei der Körper in Längsrichtung in Abschnittsteile zum Umschließen eines Objektes geschlitzt ist, wobei die Abschnittsteile auf einer Seite durch die äußere Bahn verbunden sind, und wobei die zueinander weisenden Enden der Abschnittsteile mit der inneren Verkleidungsbahn auf einer gegenüberliegenden Seite verkleidet sind, und wobei zumindest die innere Verkleidungsbahn porös ist und mit einem Neutralisierungsmittel imprägniert ist, welches ein Carbonat, ein Oxid oder ein Hydroxid eines Alkalimetalls, eines Erdalkalimetalls oder von Aluminium mit begrenzter Wasserlösbarkeit ist.

2. Langgestrecktes Formteil nach Anspruch 1, wobei die äußere Verkleidungsbahn porös it.

3. Langgestrecktes Formteil nach irgendeinem vorhergehenden Anspruch, wobei das Neutralisierungsmittel Calciumcarbonat aufweist.

4. Langgestrecktes Formteil nach irgendeinem vorhergehenden Anspruch, wobei der Schaumkörper von gekrümmter Form ist.

5. Langgestrecktes Formteil nach irgendeinem vorhergehenden Anspruch, wobei der Schaumkörper im Wesentlichen zylindrisch ist.

6. Langgestrecktes Formteil nach irgendeinem vorhergehenden Anspruch, wobei die äußere Bahn aus Metallfolie, Papier, Glas, thermoplastischem Film oder Kombinationen von zwei oder mehreren davon ist.

7. Langgestrecktes Formteil nach Anspruch 6, wobei die äußere Bahn eine Aluminiumfolie ist.

## Revendications

1. Section de forme allongée (1) comprenant un corps en mousse phénolique creux (2) de section transversale sensiblement uniforme, le corps en mousse ayant une bande de revêtement externe (4) et une bande de revêtement interne (3), dans laquelle le corps est fendu longitudinalement en parties de section pour envelopper un objet, lesdites parties de section étant liées par la bande externe d'un côté, les extrémités en regard des parties de section faisant face à la bande de revêtement interne d'un côté opposé, et dans laquelle au moins la bande de revêtement interne est poreuse et est imprégnée d'un agent neutralisant qui est un carbonate, un oxyde ou un hydroxyde d'un métal alcalin, d'un métal alcalino-terreux, ou d'aluminium avec une solubilité limitée dans l'eau.

2. Section de forme allongée selon la revendication 1, dans laquelle la bande de revêtement externe est poreuse.

3. Section de forme allongée selon l'une quelconque des revendications précédentes, dans laquelle l'agent neutralisant comprend du carbonate de calcium.

4. Section de forme allongée selon l'une quelconque des revendications précédentes, dans laquelle le corps en mousse est de forme curviligne.

5. Section de forme allongée selon l'une quelconque des revendications précédentes, dans laquelle le corps en mousse est sensiblement cylindrique.

6. Section de forme allongée selon l'une quelconque des revendications précédentes, dans laquelle la bande externe est en feuille métallique, en papier, en verre, en film thermoplastique ou des combinaisons de deux ou plus de ces éléments.

7. Section de forme allongée selon la revendication 6, dans laquelle la bande externe est une feuille d'aluminium.
